# FASCICULE DE BREVET EUROPEEN

(11) **EP 0 472 901 B1**
(45) Date de publication et mention de la délivrance du brevet: **22.11.1995**
(21) Numéro de dépôt: 91112321.4
(22) Date de dépôt: 23.07.1991
(51) Int. Cl.: H04L 12/56

(54) **Procédé d'évaluation du débit de circuits virtuels empruntant une voie de transmission à multiplexage temporel asynchrone**
Datenflussbewertungsverfahren für virtuelle Verbindungen die nichtgleichgetakte zeitmehrfachartige Übertragungswege benutzen
Method for measuring the flow of virtual circuits using an asynchronous time multiplexed transmission link

(30) Priorité: 24.07.1990 FR 9009441
(43) Date de publication de la demande: 04.03.1992
(73) Titulaire: ALCATEL CIT, 75008 Paris (FR)
(72) Inventeur: Vinel, Paul, F-78140 Velizy (FR)
(74) Mandataire: Weinmiller, Jürgen

(56) Documents cités:
- EP-A- 0 293 314
- EP-A- 0 355 243

## Description

La présente invention est relative à un procédé d'évaluation du débit de circuits virtuels empruntant une voie de transmission à multiplexage temporel asynchrone et, plus particulièrement, à un tel procédé aménagé pour faire face aux interruptions de transmission des circuits virtuels.

Une voie de transmission à multiplexage temporel asynchrone est une voie de transmission acheminant des messages de données dans des structures de données numériques appelées cellules. Chaque cellule comprend un en-tête constitué, par exemple, de quatre caractères à huit bits et un corps de message constitué d'un nombre défini de caractères, 32 par exemple. Sur la voie de transmission, de telles cellules se suivent sans interruption. S'il n'y a pas de message à transmettre, la voie de transmission achemine une cellule "vide", c'est-à-dire une cellule de même format qu'une celulle de message et comportant une information conventionnelle, aisément reconnaissable. Des dispositions sont prises pour maintenir une proportion suffisantes de telles cellules vides dans le flot des cellules de message.

L'en-tête de chaque cellule de message contient, sur deux caractères par exemple, une information définissant, à l'intention de l'extrémité de réception, la destination vers laquelle le corps de message devra être retransmis. Les deux autres caractères de l'en-tête contiennent des informations de service. La même information de destination se retrouve dans des cellules irrégulièrement espacées, appartenant à une même communication. Elle identifie ainsi, une sorte de circuit virtuel attribué à cette communication, qui occupe une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant, par rapport à un débit nominal attribué au circuit virtuel, à cause des caractéristiques de la source de messages et/ou à cause de celles des équipements de transmission antérieurement traversés. Le procédé de l'invention a pour objet premier la mesure de ce débit fluctuant.

La voie de transmission supporte à tout instant plusieurs circuits virtuels dont les cellules s'intercalent de manière irrégulière dans ce qu'il est convenu d'appeler un multiplexage temporel asynchrone. Les débits nominaux des différents circuits virtuels sont différents. Chacun d'eux fluctue et la somme de ces débits fluctuants est limitée par le débit maximal de la voie de transmission. Cette somme fluctue aussi, ce qui laisse la place à la transmission de cellules vides.

Par ailleurs, le nombre de circuits virtuels qui peuvent être séparément identifiés est très élevé et atteint par exemple 64 K. Un nombre réduit d'entre eux seulement sont actifs au même moment.

La voie de transmission fournit les cellules qu'elle achemine à des équipements de commutation et de transmission situés en aval. Ces équipements reçoivent aussi des cellules d'autres voies de transmission. Pour ne pas risquer d'engorgement dans ces équipements, il convient de vérifier qu'aucun circuit virtuel, par fraude ou par défaillance, ne fournit durablement un débit supérieur au débit nominal qui lui est attribué. Au cas où cela se produit, en effet, il est admis de prendre des dispositions répressives visant à empêcher l'acheminement par la voie de transmission de toute cellule considérée comme excédentaire par rapport au débit nominal du circuit virtuel. Un second objet de la présente invention est donc de pourvoir à cette action répressive.

On connaît, par la demande de brevet européenne n° EP-A-0293314, ainsi que par les demandes européennes EP-A-0403995, EP-A-0403996 et EP-A-0403997, publiées le 27.12.90, un procédé d'évaluation du débit de circuits virtuels permettant d'atteindre les deux objets que l'on vient de définir, basé sur l'emploi d'une mémoire dans laquelle, à chaque circuit virtuel est affecté un emplacement contenant un ensemble de données - que l'on appellera contexte - définissant les conditions de l'évaluation du débit de ce circuit virtuel et contenant des informations résultant d'étapes antérieures de cette évaluation. Selon ces dernières demandes ce procédé utilise aussi une horloge aménagée pour fournir une heure courante, exprimée dans une unité associée à ce circuit virtuel. A la réception de chaque cellule, le contexte du circuit virtuel auquel appartient cette cellule est lu. Ce contexte contient une heure de début qui était l'heure courante observée et enregistrée à l'occasion de la réception d'une cellule antérieure du circuit virtuel considéré. Cette heure de début est retranchée de l'heure courante actuelle et la différence de temps ainsi établie, avec le nombre de cellules observées entre celle qui a donné lieu à l'enregistrement de l'heure de début et la cellule présente est la base de l'évaluation du débit : on peut en effet en déduire soit le nombre de cellules dans un intervalle de temps donné, en attendant que la différence de temps ait atteint cet intervalle de temps donné, soit le temps nécessaire pour recevoir un nombre donné de cellules, en attendant que ce nombre de cellules ait été atteint.

Dans un cas comme dans l'autre, la donnée de base de l'évaluation de débit est une différence de temps établie entre une heure courante, qui est une indication numérique fournie par une horloge, et une heure de début, qui est une indication numérique semblable, fournie par l'horloge auparavant et alors enregistrée dans le contexte. Cette différence de temps est établie à l'arrivée d'une cellule. On peut par ailleurs concevoir d'autres méthodes d'évaluation de débit faisant appel à une telle différence de temps.

Le problème qui se pose, dans de tels cas, est que, si l'indication fournie par l'horloge est limitée en nombre de bits, ce qui est particulièrement intéressant car cela permet de limiter le volume du contexte de chaque circuit virtuel, il peut se produire que, en cas d'interruption prolongée de la transmission de cellules d'un circuit virtuel considéré, l'horloge fasse, pour ce circuit virtuel, un ou plusieurs cycles complets avant qu'arrive une nouvelle cellule de ce circuit virtuel. La différence de temps alors établie n'est plus significative de l'écart entre la nouvelle cellule et la cellule précédente ayant donné lieu à l'enregistrement de l'heure de début ; elle peut donc aboutir à une décision erronée, inacceptable quand elle a pour effet la suppression d'une cellule.

La présente invention a donc pour objet propre de fournir des moyens évitant de telles décisions erronées.

Selon une caractéristique de l'invention, il est prévu par surcroît de procéder à une exploration cyclique desdits contextes et, au cours de cette exploration cyclique, procéder, dans chaque contexte, à l'incrémentation d'un compteur de cycles d'exploration ayant une position initiale, ainsi que des moyens additionnels pour, lors de l'arrivée d'une cellule, lire ce compteur de cycles d'exploration, noter sa position relative, par rapport à sa position initiale, ainsi que, lorsque la position relative notée correspond à un nombre donné de cycles d'exploration, ce nombre étant supérieur à un, inhiber toute action répressive.

Selon une autre caractéristique de l'invention, ledit nombre donné est une valeur de seuil inscrite dans le contexte.

Selon une autre caractéristique de l'invention, ladite position initiale est une position déterminée, telle que O, et ledit compteur de cycles d'exploration est remis en position initiale lors du traitement d'évaluation de chaque cellule reçue se référant au contexte considéré.

Selon une variante, ladite position initiale est indiquée par une valeur de repère enregistrée dans le contexte, et la position dudit compteur de cycles d'exploration est incrite dans le contexte comme nouvelle position initiale lors du traitement d'évaluation de chaque cellule reçue se référant au contexte considéré.

De plus, selon une autre caractéristique de l'invention, il est prévu de donner à ladite différence de temps la valeur maximale qu'elle peut prendre et de donner au nombre de cellules comptées la valeur minimale qu'il peut prendre, dans le but de reprendre les processus d'évaluation en partant d'une situation dans laquelle on considère que, pendant l'intervalle de temps maximal à considérer aucune cellule n'a été reçue.

Les différents objets et caractéristiques de l'invention seront maintenant exposés de façon plus détaillée dans la description qui va suivre d'un mode de mise en oeuvre de l'invention, qui sera faite en se référant aux figures annexées qui représentent :
- la figure 1, le diagramme par blocs d'un exemple de réalisation de la présente invention,
- la figure 2, un module de circuits d'exploration inclus dans le bloc de traitement BT de la figure 1,
- la figure 3, un premier module de mesure MMD1 inclus dans le bloc de traitement BT de la figure 1,
- la figure 4, un deuxième module de mesure MMD2 inclus dans le bloc de traitement BT de la figure 1,
- la figure 5, un module de décision MSC inclus dans le bloc de traitement BT de la figure 1,
- la figure 6, un module de circuits d'exploration MEX′ qui est une variante de réalisation du module MEX de la figure 2, permettant de disjoindre l'observation du contenu d'un contexte de l'action prise en réponse à cette observation.

La description qui va suivre est basée sur celle du dispositif d'évaluation du débit de circuits virtuels de la demande de brevet EP-A-0403996, description que l'on reprendra ici suffisamment pour que l'homme de métier comprenne aisément comment se place et intervient la présente invention. Bien entendu, il ne s'agit que d'un exemple d'application et l'invention s'appliquerait de la même façon en relation avec des dispositifs d'évaluation similaires.

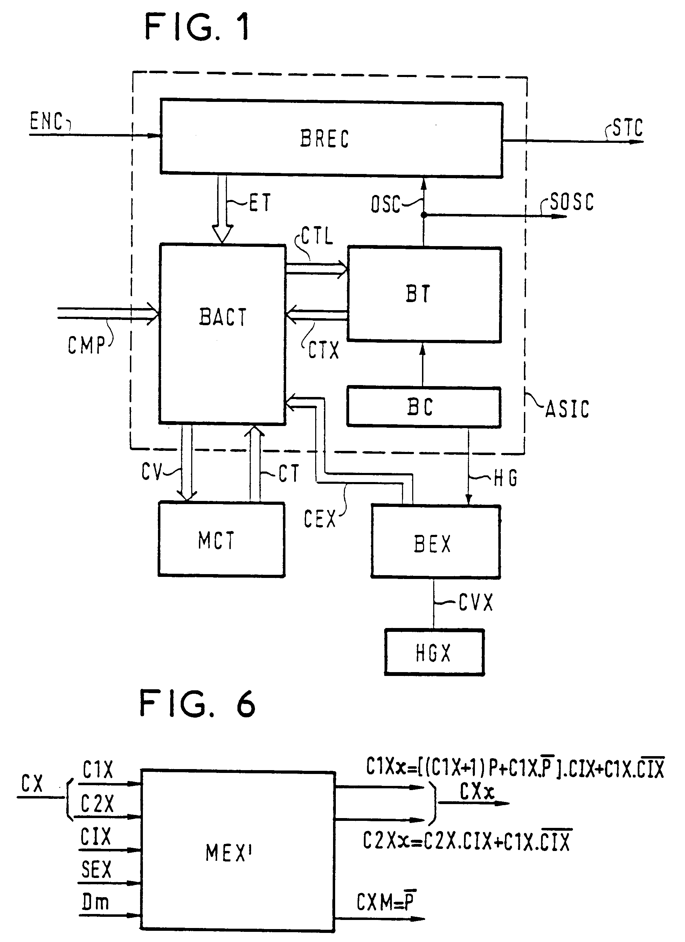

Le système d'évaluation de débit de la figure 1, incorporant la présente invention, est interposé entre une entrée de cellules ENC et une sortie de cellules STC. Il est ainsi intercalé sur une voie de transmission à multiplexage temporel asynchrone du type défini dans le préambule de la présente demande. Pour fixer les idées, le débit binaire de la voie de transmission, reçu sur l'entrée ENC, est par exemple de 600 Mbit/s. Ce débit traverse un bloc de réception-émission de cellules BREC que l'on peut voir comme un simple registre à décalage. Tant que les débits des circuits virtuels supportés par la liaison sont acceptables, toute cellule reçue sur l'entrée ENC est purement et simplement retransmise sur la sortie STC, avec un retard égal, par exemple, à la durée de transmission d'une celule, soit 0,5 µs environ.

Dès que l'en-tête d'une cellule est disponible dans le bloc BREC, cet en-tête ET est fourni à un bloc d'accès au contexte de circuit virtuel BACT. Dans ce bloc BACT, le numéro de circuit virtuel, CV, sert d'adresse pour la lecture, dans une mémoire de contextes MCT, du contexte CT du circuit virtuel auquel appartient la cellule reçue. Ce contexte CT est un ensemble d'informations numériques, les unes semi-permanentes, c'est-à-dire fixées pour la durée d'une communication empruntant le circuit virtuel, les autres modifiables, c'est-à-dire susceptibles d'évoluer à la réception de chaque cellule du circuit virtuel. Ce contexte contient ainsi une information définissant le "passé" du circuit virtuel. Le bloc d'accès BACT fournit le contexte lu, alors appelé CTL, au bloc de traitement BT, lequel dispose par ailleurs d'une information chronométrique fournie par un bloc de compteur BC. A partie de ces deux informations, le bloc de traitement BT élabore un contexte mis à jour CTX qui est retourné au bloc d'accès BACT, pour être réinscrit à la même adresse CV, et il fournit un signal OSC, dans le cas où l'évaluation de débit accomplie au sujet de la cellule reçue manifeste la nécessité d'une action répressive, au sens précédemment exposé.

Le contexte mis à jour CTX contient des informations modifiables qui ont éventuellement changé, selon le programme de traitement du bloc BT, en fonction du fait même de la réception d'une cellule et, surtout, de l'heure d'arrivée de cette cellule, indiquée par le bloc de compteur BC.

Le signal OSC est transmis au bloc BREC où, dans une forme de mise en oeuvre, il aura pour effet de remplacer la cellule reçue par une cellule vide. Dans une autre forme de mise en oeuvre, le signal OSC provoque seulement le marquage d'un indicateur prévu dans l'en-tête de la cellule ; il signifiera, dans les organes de commutation que traversera ultérieurement le cellule, que celle-ci peut ne pas être retransmise en cas de surcharge. D'autres cas d'utilisation du signal OSC peuvent être imaginés, matérialisés par une sortie SOSC pour le signal OSC.

Le temps mis par les blocs BACT et BT pour accomplir les opérations que l'on vient de décrire est avantageusement inférieur ou égal à la durée de transmission d'une cellule, de sorte que ces blocs sont ensuite disponibles pour un nouveau cycle de fonctionnement, dès la réception de la cellule suivante. On pourrait toutefois, comme il est bien connu dans la technique, aménager les fonctions des deux blocs, de manière que les opérations de lecture-traitement-réinscription d'un contexte, pour une cellule reçue, se recouvrent avec les mêmes opérations relatives à la cellule suivante, afin que le bloc d'accès BACT et le bloc de traitement BT aient chacun la durée entière d'une cellule pour les opérations relatives à cette cellule.

Les informations de contexte CT sont initialement inscrites dans la mémoire MCT par un processeur de commande non représenté communicant avec le bloc d'accès BACT par une liaison de commande CMP. A chaque fois, le processeur de commande fournit une adresse de circuit virtuel CV et une information de contexte CT. On peut envisager que le bloc d'accès BACT soit par exemple pourvu de moyens d'identification des cellules vides et qu'il procède à l'inscription d'un nouveau contexte dans le temps de réception de chaque cellule vide. Il est encore possible d'utiliser à cette fin une partie du cycle de fonctionnement normal du bloc BACT.

Le bloc BACT contiendra enfin des dispositifs de contrôle de fonctionnement et le processeur, par la liaison CMP, viendra y lire des comptes-rendus de fonctionnement.

Les blocs BREC, BACT, BT et BC ont été représentés à l'intérieur d'un cadre en traits interrompus car, comme on le verra par la suite, ils peuvent être réalisés collectivement sous la forme d'un circuit intégré à la demande (ASIC).

A ces dispositions, l'invention ajoute un bloc d'exploration cyclique BEX, recevant des numéros de circuits virtuels à explorer CVX qui lui sont fournis par une horloge d'exploration HGX. Le bloc BEX s'adresse au bloc d'accès BACT par la liaison de commande d'exploration CEX, pour chaque numéro CVX, en fournissant ce numéro CVX au bloc d'accès BACT, lequel adresse le contexte CT correspondant, en modifie le contenu à l'aide du bloc de traitement BT, d'une façon simple et qui sera définie plus loin, puis réinscrit le contexte CT ainsi modifié. Une telle opération peut être accomplie une ou plusieurs fois, c'est-à- dire pour un ou plusieurs contextes de circuits virtuels, dans des intervalles de temps qui lui sont réservés à l'intérieur du temps de transmission d'une cellule. La fonction d'exploration est ainsi entrelacée avec le traitement normal d'évaluation relatif aux cellules transitant par le dispositif d'évaluation. L'horloge HGX est agencée pour fournir successivement les numéros de tous les circuits virtuels, qu'ils soient actifs ou non.

Dans ce qui suit, on ne donnera pas de description détaillée du bloc de réception/émission BREC qui peut être, pour l'essentiel, un registre à décalage, ni du bloc de compteur BC qui sera un simple compteur binaire avançant d'un pas à chaque période d'une horloge incorporée et passant ainsi cycliquement par toutes ses positions. On ne décrira pas non plus dans le détail le bloc d'accès BACT dont les fonctions ont été clairement définies et dont la réalisation, liée à la technologie appliquée pour la mémoire MCT, est à la portée de l'homme de métier. Il en va de même en ce qui concerne le bloc d'exploration BEX qui, recevant des impulsions d'horloge HG du bloc de compteur BC, commandera en conséquence, pour chacune d'elles, la progression de l'horloge HGX et une opération d'exploration d'un contexte au bloc d'accès BACT.

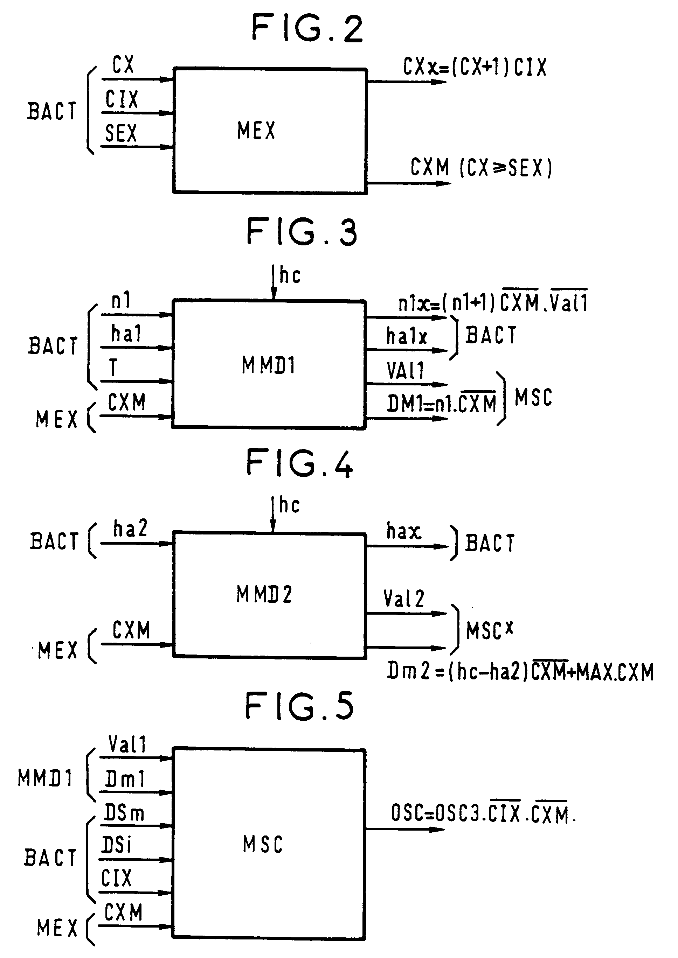

On ne décrira donc que le bloc de traitement BT, et partiellement seulement, dans ce qui est nécessaire pour comprendre le mode de réalisation de l'invention, en se référant maintenant aux figures 2 à 5.

La figure 2 représente un module de circuits d'exploration MEX inclus dans le bloc de traitement BT. Ce module de circuits d'exploration MEX reçoit du bloc d'accès BACT, dès la lecture d'un contexte de circuit virtuel CT par le bloc BACT, le contenu CX d'une zone d'enregistrement du contexte CT servant de compteur d'exploration. Si la lecture du contexte CT a lieu dans le cadre de la fonction d'exploration prévue par la présente invention et commandée par le bloc d'exploration BEX (voir figure 1), le bloc BACT fournit également un signal de commande d'incrémentation CIX. En échange, le module MEX fournit au bloc d'accès BACT une nouvelle valeur CXx = (CX + 1).CIX, c'est-à-dire la valeur ancienne augmentée d'une unité, puisque le signal CIX est présent, pour enregistrement dans ladite zone d'enregistrement du contexte CT. Dans la mesure où l'exploration commandée par le bloc BEX est cyclique et concerne tous les contextes de tous les circuits virtuels, on voit ainsi que chaque compteur d'exploration CX avance d'un pas à chaque cycle d'exploration.

Par ailleurs, si le signal CIX n'est pas présent lors de la lecture du context CT, ce qui signifie que cette lecture ne se place pas dans le cadre de l'exploration cyclique, mais dans le cadre de la réception d'une cellule, le module de circuits d'exploration MEX prépare alors une nouvelle valeur CXx qui est nulle, puisque CIX est égal à zéro. Le compteur d'exploration est ainsi réinitialisé après la réception de chaque cellule. Par suite, pendant la réception de cette cellule, la valeur CX indique le nombre de cycles d'exploration qui ont donné lieu à incrémentation de la valeur CX depuis la dernière cellule reçue de ce circuit virtuel, avant la cellule présente.

Par ailleurs, le bloc d'accès BACT fournit également au module de circuits d'exploration MEX du bloc BT une valeur de seuil d'exploration SEX lue dans un emplacement d'enregistrement du contexte CT. A chaque lecture du contexte, la valeur CX est comparée à ce seuil. Si la valeur CX est égale ou supérieure au seuil SEX, un signal de pause CXM est fourni à l'intention des autres modules de circuits du bloc de traitement BT. Ainsi, le contexte CT de chaque circuit virtuel spécifie un nombre de cycles d'exploration après lesquels le signal de pause CXM est fourni, indiquant que la transmission de cellules s'est interrompue pendant une durée relativement longue et que, par conséquent, le processus d'évaluation de débit doit en être modifié. On verra cela un peu plus loin.

Pour les besoins de l'évaluation de débit des circuits virtuels, le bloc de traitement comprend un certains nombre de modules dont, dans le cadre limité de la présente invention, on n'a fourni que trois exemples considérés comme particulièrement significatifs.

On décrira d'abord un premier module de mesure MMD1, en se reportant à la figure 3. Ce module de mesure MMD1 reçoit du contexte CT, fournies par le bloc BACT, les indications suivantes :
- la durée T d'un intervalle de mesure également appelé T,
- une heure de début ha1 de l'intervalle de mesure T, établie antérieurement et enregistrée dans le contexte CT à partir de l'heure courante hc,
- le nombre n1 de cellules déjà reçues dans l'intervalle de mesure T en cours.

Il reçoit également l'heure courante, en provenance du bloc BC, ainsi que le signal de pause CXM, en provenance du module d'exploration MEX.

Le module MMD1 effectue la différence de temps hc - ha1. Si cette différence de temps est inférieure à T, il fournit seulement un nouveau nombre de cellules reçues n1x = (n1 + 1).C̅X̅M̅.V̅a̅l̅1, c'est-à-dire le nombre précédent augmenté de 1, à la condition que le signal de pause fourni par le module d'exploration MEX n'indique pas que la cellule reçue arrive après une pause (CXM = 1) et à la condition que l'intervalle de mesure ne soit pas terminé (Val1 = 1, comme on le verra plus loin) ; ce nouveau nombre est enregistré dans le contexte à l'emplacement de celui qui vient d'être lu. Cela permet donc de compter les cellules dans l'intervalle de mesure T. Mais, si une pause se produit, d'une durée supérieure à ce qui est indiqué par la valeur SEX (voir description de la figure 2), et que l'on peut prévoir de durée supérieure à celle de l'intervalle de mesure, le signal CXM est présent, le signal C̅X̅M̅ a pour valeur O et le compte de nombre de cellules n1x est ainsi rendu égal à zéro, ce qui est conforme à la réalité : aucune cellule n'a été reçue dans un intervalle de temps au moins égal à l'intervalle de mesure.

Si, par contre, la différence de temps est égale ou supérieure à T, le module de mesure MMD1 fournit un signal Val1 = 1. Le même signal Val1 = 1 est fourni aussi, si le signal de pause CXM est présent. Le signal Val1 est accompagné d'une valeur Dm1 = n1.C̅X̅M̅. Il s'agit du nombre de cellules comptées jusqu'à l'arrivée de la cellule présente, s'il n'y a pas de pause, ou alors d'un nombre nul, s'il y a eu pause.

Le module MMD1 fournit ainsi normalement une mesure de débit qui est le nombre de cellules reçues dans un intervalle de temps donné. On verra en se reportant à la figure 5 comment une telle mesure de débit peut être exploitée. S'il s'est produit une pause, le module fournit aussi une mesure de débit, mais qui est nulle ; elle sera exploitée de la même façon.

Dans ces deux cas où une mesure de débit est fournie, qu'il y ait eu pause ou non, le contexte CT du circuit virtuel est réinitialisé par deux valeurs n1x et ha1x qui ne sont pas indiquées à la figure, pour simplifier celle-ci : ha1x = hc, l'heure courante fournissant une nouvelle heure de début, et n1x = 1, le nouveau compte de cellules reçues est réduit à une unité, correspondant à la cellule présente.

Le module de mesure MMD2 de la figure 4, à l'arrivée d'une cellule d'un circuit virtuel, reçoit du contexte CT de ce circuit virtuel, et fournie par le bloc d'accès BACT, une heure de début ha2 qui est cette fois l'heure courante enregistrée dans le contexte à la réception de la cellule précédente de ce circuit virtuel. Il reçoit aussi l'heure courante hc et le signal de pause CXM déjà cités.

En échange le module MMD2 fournit le signal Val2, sans aucune condition, une nouvelle heure de début ha2x qui est l'heure courante hc, également sans condition, ainsi qu'un signal de mesure Dm2 = (hc - ha2).C̅X̅M̅ + MAX.CXM, ce qui signifie que ce signal de mesure Dm2 est égal à la différence de temps, c'est-à-dire à l'intervalle de temps qui s'est écoulé entre la cellule précédente et la cellule présente, s'il n'y a pas eu de pause, ou alors qui est égal à une valeur MAX, s'il y a eu une pause. Cette valeur MAX est l'intervalle de temps maximal qui peut être pris en compte dans le processus d'évaluation du débit en partant de l'intervalle de temps entre cellules consécutives.

On notera que, dans cet exemple, le fait que la cellule arrivée se présente après une pause est signalé par le même signal CXM que dans le cas précédent. Cela peut signifier que l'intervalle de temps évalué par le seuil SEX est le même dans les deux cas, en supposant que les deux modes d'évaluation de débit soient pratiqués en même temps pour le même circuit virtuel. Cela entraîne que l'heure de début enregistrée dans le contexte pour ces deux modes a le même format. Mais, il est bien évident que le signal CXM pourrait être produit dans des conditions différentes dans ces deux cas, en donnant des valeurs différentes au seuil SEX. De plus, si les deux modes d'évaluation de débit sont pratiqués ensemble pour le même circuit virtuel, il est encore possible de prévoir alors deux seuils SEX et deux signaux CXM, distincts l'un de l'autre, fournis l'un comme l'autre par le module MEX de la figure 2 et utilisés l'un par le module de la figure 3 et l'autre par le module de la figure 4.

Le mode d'exploitation des mesures de débit effectuées par le module de mesure MMD1 est illustré à la figure 5 qui représente un module de décision MSC qui reçoit du module de mesure MMD1 le signal de validation Val1 et le résultat de mesure Dm1. Ce module de décision reçoit également du contexte CT, par le bloc d'accès BACT, deux seuils DSm et DSi et le signal d'exploration CIX déjà mentionné, et du module d'exploration MEX le signal de pause CXM. Le seuil DSm est le nombre maximal de cellules que le circuit virtuel considéré ne doit dépasser, à n'importe quel moment à l'intérieur de l'intervalle de mesure. Le seuil DSi est un seuil relatif au nombre de cellules comptées dans la totalité de l'intervalle de mesure, que le circuit virtuel considéré est autorisé à atteintre en trafic normal et dont le dépassement fait l'objet d'un traitement spécifique qui sort du cadre de la présente invention et ne qui sera par conséquent pas décrit.

En réponse, dans le module de décision MSC, le résultat de mesure Dm1 est comparé aux seuils DSm et DSi. Le signal OSC3 est fourni dès lors que le résultat de mesure Dm1 est égal ou supérieur au nombre DSm, alors que le signal de validation Val1 n'est pas présent. Cela se produit donc à l'intérieur d'un intervalle de mesure, si un nombre relativement élevé de cellules sont soudainement reçues. Un signal OSC est alors fourni, à la condition que l'on ne soit pas dans un cycle d'exploration (CIX = 1) et que l'on ne soit pas à la fin d'une pause (CXM = 1). Ce signal demande une action répressive. Cette action répressive peut provoquer la suppression de la cellule présente ; elle aura lieu aussi pour toutes les cellules suivantes, jusqu'à la fin de l'intervalle de mesure.

Le signal OSC3 est également fourni lorsque le résultat de mesure Dm1 est égal ou supérieur au nombre DSi, alors que le signal de validation Val1 est présent, à la fin d'un intervalle de mesure (ou d'une pause). Le signal OSC est fourni lorsque l'on est ni dans un cycle d'exploration ni à la fin d'une pause. Il peut aussi provoquer la suppression de la cellule reçue et, par exemple, interdire la réinitialisation de la valeur n1x, telle que décrite précédemment, pour la remplacer par un forçage dans une position n1x = n1 - DSi, qui porterait au débit de l'intervalle de mesure suivant, l'excédent constaté dans l'intervalle de mesure qui vient de se terminer.

On ne décrira pas un module de décision MSC^{x} auquel le module de mesure MMD2 adresse son résultat de mesure, comme indiqué à la figure 4. Ce module peut n'être qu'une variante du module MSC dans laquelle le seuil DSm est l'intervalle de temps minimal entre deux cellules, tandis que le seuil DSi correspondrait, par exemple, à l'intervalle moyen calculé sur un certain nombre de cellules. De la même façon que dans le module de décision MSC, selon l'invention, le signal de pause CXM (le même ou une version semblable propre à ce mode d'évaluation, comme envisagé plus haut) interdira l'action répressive provoquée par le signal OSC, lorsque l'évaluation tendant à la déclencher a lieu à la fin d'une pause dans la transmission des cellules sur le circuit virtuel.

Il reste à décrire, en se référant à la figure 6, un module de circuits d'exploration MEX′ qui est une variante de réalisation du module MEX de la figure 2.

Cette variante est prévue, particulièrement, bien que non exclusivement, pour le cas où l'ensemble du dispositif d'évaluation serait mis en oeuvre, au moins partiellement, à l'aide d'un opérateur programmé tel qu'un microprocesseur. Dans ce cas, il est intéressant de permettre que le fonctionnement du microprocesseur dans l'exploration cyclique, puisse être interrompu par le traitement d'évaluation prioritaire consécutif à l'arrivée d'une cellule. Alors, l'exploration cyclique s'effectuant au profit d'un contexte donné, il faut prévoir que la cellule arrivée demande le traitement d'évaluation du même contexte. Ce traitement d'évaluation modifie le contexte, on l'a vu. Or le traitement d'exploration cyclique interrompu ignorera cette modification et modifiera à son tour le contexte comme si de rien n'était, sur la base des informations fournies par le contexte avant l'interruption, aboutissant ainsi à des informations modifiées inexactes ; cela peut entraîner par la suite une décision erronée relativement à l'acheminement des cellules du circuit virtuel en cause.

Pour éviter cela, conformément à la figure 6, dans le contexte fourni au module MEX′ par le bloc BACT, la valeur CX comprend deux valeurs séparées C1X et C2X, les autres données étant les mêmes que dans le cas de la figure 2. La valeur C1X constitue un compteur de cycles d'exploration, dont l'évolution reste confiée au traitement d'exploration cyclique, tandis que la valeur C2X est un repère de début de comptage dont l'évolution est commandée par le traitement d'évaluation du contexte. Le module MEX′ fait évoluer ces deux valeurs en fournissant des valeurs de mise à jour C1Xx et C2Xx composant la valeur mise à jour CXx, de la façon que l'on va maintenant décrire.

On va supposer qu'initialement les valeurs C1X et C2X sont égales et l'on va se placer dans le cas d'un cycle d'exploration de sorte que le signal de commande CIX est présent. Dans le module MEX′, une valeur intermédiaire P est établie en comparant la différence C1X - C2X à la valeur de seuil SEX. Si C1X - C2X < SEX, alors P = 1. Dans ce cas, comme indiqué à la figure, C1Xx = C1X + 1. Par contre, si C1X - C2X est égal (ou supérieur) à SEX, la valeur intermédiaire P est nulle est C1Xx = C1X. En d'autres termes, le compteur C1X part d'une position indiquée par C2X et avance pas à pas jusqu'à ce qu'il atteigne un écart spécifié par le seuil SEX, par rapport à sa position de départ indiquée par C2X, et alors il s'arrête. Incidemment, on notera que le repère C2X est maintenu (C2Xx = C2X lorsque CIX = 1).

Par ailleurs, comme indiqué à la figure, le module MEX′ fournit le signal de pause CXM lorsque P = 0 ( P̅ = 1). Ainsi, comme dans le cas du module MEX de la figure 2, avec le module MEX′ de la figure 6, le contexte CT de chaque circuit virtuel spécifie un nombre de cycles d'exploration après lesquels le signal de pause CXM est fourni, indiquant que la transmission de cellules s'est interrompue pendant une durée relativement longue et que, par conséquent, le processus d'évaluation de débit doit en être modifié.

Dans le cas d'un traitement d'évaluation, le signal de commande CIX est absent. Comme on peut le voir à la figure 6, la valeur C1X est alors inchangée (C1Xx = C1X lorsque CIX = O ou C̅I̅X̅ = 1), tandis que le repère C2X est aligné sur la valeur C1X (alors C2Xx = C1X). On retrouve ainsi les conditions initiales, rétablies à l'arrivée de chaque cellule.

La variante du module MEX de la figure 6 offre l'avantage que, si le traitement d'exploration cyclique est interrompu après la lecture de C1X, cette valeur étant conservée, le traitement d'évaluation cause de l'interruption ne la modifie pas. Il ne modifie que le repère C2X. Après l'interruption, à la reprise du traitement d'exploration cyclique, le compteur C1X avance d'un pas, ce qui correspond exactement au passage de l'exploration cyclique immédiatement après l'arrivée d'une cellule, sauf si la valeur intermédiaire P était déjà établie et de valeur 1, ce qui correspond exactement au passage de l'exploration cyclique immédiatement avant l'arrivée de la cellule. L'interruption n'a donc ainsi aucune conséquence désavantageuse.

Il est bien évident que les descriptions qui précèdent n'ont été fournies qu'à titre d'exemple non limitatif et que de nombreuses variantes peuvent être envisagées, sans sortir pour autant du cadre de l'invention.

## Revendications

1. Dispositif d'évaluation du débit de circuits virtuels acheminant des cellules et empruntant une voie de transmission à multiplexage temporel asynchrone comprenant une mémoire (MCT) dans laquelle, à chaque circuit virtuel est affecté un emplacement contenant un ensemble de données - que l'on appellera contexte (CT) - définissant les conditions de l'évaluation du débit de ce circuit virtuel et contenant des informations résultant d'étapes antérieures de cette évaluation, caracterisé par une horloge aménagée (BC) pour fournir une heure courante et des moyens de traitement tels que, à la réception de chaque cellule, le contexte du circuit virtuel auquel appartient cette cellule est lu, ce contexte (CT) contenant une heure de début qui était l'heure courante observée et enregistrée à l'occasion de la réception d'une cellule antérieure du circuit virtuel considéré, cette heure de début est retranchée de l'heure courante actuelle et la différence de temps ainsi établie, avec le nombre de cellules observées entre celle qui a donné lieu à l'enregistrement de l'heure de début et la cellule présente est la base de l'évaluation du débit, le dispositif comprenant en outre des moyens (HGX, BEX, CEX, MEX) pour procéder à une exploration cyclique desdits contextes (CT) et, au cours de cette exploration cyclique, procéder, dans chaque contexte, à l'incrémentation d'un compteur de cycles d'exploration (CX) ayant une position initiale, ainsi que des moyens additionnels (MEX) pour, lors de l'arrivée d'une cellule, lire ce compteur de cycles d'exploration, noter sa position relative, par rapport à sa position initiale, ainsi que, lorsque la position relative notée correspond à un nombre donné de cycles d'exploration, ce nombre étant supérieur à un, inhiber toute action répressive (CXM).

2. Dispositif d'évaluation de débit de circuits virtuels acheminant des cellules et empruntant une voie de transmission à multiplexage temporel asynchrone conforme à la revendication 1, caractérisé en ce que ledit nombre donné est une valeur de seuil (SEX) inscrite dans le contexte.

3. Dispositif d'évaluation de débit de circuits virtuels acheminant des cellules et empruntant une voie de transmission à multiplexage temporel asynchrone conforme à la revendication 1 ou 2, caractérisé en ce que ladite position initiale est une position déterminée, telle que O, et en ce que ledit compteur de cycles d'exploration (CX) est remis en position initiale lors du traitement d'évaluation de chaque cellule reçue se référant au contexte considéré.

4. Dispositif d'évaluation de débit de circuits virtuels acheminant des cellules et empruntant une voie de transmission à multiplexage temporel asynchrone conforme à la revendication 1 ou 2, caractérisé en ce que ladite position initiale est indiquée par une valeur de repère (C2X) enregistrée dans le contexte, et en ce que la position dudit compteur de cycles d'exploration (C1X) est incrite dans le contexte comme nouvelle position initiale lors du traitement d'évaluation de chaque cellule reçue se référant au contexte considéré.

5. Dispositif d'évaluation de débit de circuits virtuels acheminant des cellules et empruntant une voie de transmission à multiplexage temporel asynchrone conforme à l'une quelconque des revendications 1 à 4, caractérisé en ce qu'il comprend de plus des moyens (CXM, MMD1, MMD2) pour donner à ladite différence de temps (Dm2) la valeur maximale qu'elle peut prendre et de donner au nombre de cellules comptées (Dm1) la valeur minimale qu'il peut prendre, dans le but de reprendre les processus d'évaluation en partant d'une situation dans laquelle on considère que, pendant l'intervalle de temps maximal à considérer aucune cellule n'a été reçue.

## Patentansprüche

1. Vorrichtung zur Ermittlung des Durchsatzes von virtuellen Schaltkreisen, die Zellen übertragen und einen Übertragungskanal mit asynchroner Zeitmultiplexierung verwenden, wobei die Vorrichtung einen Speicher (MCT) aufweist, in dem jedem virtuellen Schaltkreis eine Speicherstelle mit einem Datensatz zugewiesen ist, der Kontext (CT) genannt wird und die Bedingungen für die Durchsatzermittlung dieses virtuellen Schaltkreises definiert sowie Informationen enthält, die von früheren Phasen dieser Ermittlung stammen, gekennzeichnet durch einen Taktgeber (BC), der so gestaltet ist, daß er eine laufende Uhrzeit liefert, und durch Bearbeitungsmittel derart, daß beim Empfang jeder Zelle der Kontext des diese Zelle enthaltenden virtuellen Schaltkreises gelesen wird, wobei dieser Kontext (CT) eine Anfangszeit enthält, die die aktuelle Zeit ist, die bei Empfang einer früheren Zelle des betrachteten virtuellen Schaltkreises festgehalten und gespeichert wurde, wobei diese Anfangszeit von der aktuellen laufenden Zeit abgezogen wird und wobei die so gefundene Zeitdifferenz zusammen mit der Anzahl von beobachteten Zellen zwischen der, die zur Speicherung der Anfangszeit geführt hat, und der laufenden Zeit die Basis der Durchsatzermittlung ist, wobei die Vorrichtung weiter Mittel (HGX, BEX, CEX, MEX) aufweist, um eine zyklische Exploration der Kontexte (CT) durchzuführen und während dieser zyklischen Exploration in jedem Kontext einen Explorationszyklenzähler (CX) zu inkrementieren, der eine Anfangsstellung besitzt, wobei die Vorrichtung weiter zusätzliche Mittel (MEX) enthält, um beim Eintreffen einer Zelle diesen Explorationszyklenzähler zu lesen, seine relative Stellung bezüglich seiner Anfangsstellung zu notieren sowie jede repressive Maßnahme (CXM) zu verhindern, wenn die notierte relative Lage einer gegebenen Zahl von Explorationszyklen entspricht, die größer als Eins ist.

2. Vorrichtung nach Anspruch 1 zur Durchsatzermittlung von virtuellen Schaltkreisen, die Zellen übertragen und einen Übertragungskanal mit asynchroner Zeitmultiplexierung verwenden, dadurch gekennzeichnet, daß die gegebene Zahl ein Schwellwert (SEX) ist, der in den Kontext eingeschrieben ist.

3. Vorrichtung nach Anspruch 1 oder 2 zur Durchsatzermittlung von virtuellen Schaltkreisen, die Zellen übertragen und einen Übertragungskanal mit asynchroner Zeitmultiplexierung verwenden, dadurch gekennzeichnet, daß die ursprüngliche Zählerstellung eine bestimmte Stellung ist, wie z.B. die Stellung Null, und daß der Explorationszyklenzähler (CX) in die Ursprungsstellung bei der Ermittlungsbehandlung jeder empfangenen Zelle gebracht wird, die sich auf den betreffenden Kontext bezieht.

4. Vorrichtung nach Anspruch 1 oder 2 zur Durchsatzermittlung von virtuellen Schaltkreisen, die Zellen übertragen und einen Übertragungskanal mit asynchroner Zeitmultiplexierung verwenden, dadurch gekennzeichnet, daß die ursprüngliche Zählerstellung durch einen Bezugswert (C2X) angegeben ist, der im Kontext gespeichert ist, und daß die Stellung des Explorationszyklenzählers (C1X) in den Kontext als neue Anfangsstellung bei der Ermittlungsbearbeitung jeder Zelle eingeschrieben wird, die sich auf den betreffenden Kontext bezieht.

5. Vorrichtung nach einem beliebigen der Ansprüche 1 bis 4 zur Durchsatzermittlung von virtuellen Schaltkreisen, die Zellen übertragen und einen Übertragungskanal mit asynchroner Zeitmultiplexierung verwenden, dadurch gekennzeichnet, daß sie außerdem Mittel (CXM, MMD1, MMD2) aufweist, um der Zeitdifferenz (dm2) den Maximalwert, den diese Differenz annehmen kann, und der gezählten Zellenanzahl den Minimalwert zu geben, den diese Anzahl annehmen kann, um den Ermittlungsprozeß ausgehend von einer Situation wieder aufnehmen zu können, in der davon ausgegangen wird, daß während des maximalen zu berücksichtigenden Zeitintervalls keine Zelle empfangen worden ist.

## Claims

1. Apparatus for evaluating the data rate of virtual circuits conveying cells and occupying an asynchronous time-multiplexed transmission path, the apparatus comprising a memory (MCT) in which each virtual circuit is allocated space containing "context" (CT) data, defining the data rate evaluation conditions of the virtual circuit and containing information resulting from earlier stages in said evaluation, the apparatus being characterized by a clock (BC) organized to deliver a current time, and processor means such that on reception of each cell the context of the virtual circuit to which this cell belongs is read, said context (CT) containing a starting time which was the current time as observed and recorded when an earlier cell of the virtual circuit under consideration was received, said starting time being subtracted from the present current time and the time difference established in this way together with the number of cells observed between the present cell and the cell that gave rise to the starting time being recorded constitutes the basis on which the data rate is evaluated, the apparatus further including means (HGX, BEX, CEX, MEX) for cyclically scanning said context (CT) and, during said cyclic scanning, and for incrementing a scan cycle counter (CX) in each context, which counter has an initial position, together with additional means (MEX) responsive to the arrival of a cell to read the scan cycle counter, to observe its position relative to its initial position, and when the observed relative position corresponds to a given number of scan cycles, said number being greater than one, to inhibit any repressive countermeasures (CXM).

2. Apparatus for evaluating the data rate of virtual circuits conveying cells and occupying an asynchronous time-multiplexed path according to claim 1, the apparatus being characterized in that said given number is a threshold value (SEX) recorded in the context.

3. Apparatus for evaluating the data rate of virtual circuits conveying cells and occupying an asynchronous time-multiplexed path according to claim 1 or 2, characterized in that said initial position is a determined position such as zero, and in that said scan cycle counter (CX) is reset to its initial position whenever data rate evaluation processing is being performed for each received cell that refers to the context under consideration.

4. Apparatus for evaluating the data rate of virtual circuits conveying cells and occupying an asynchronous time-multiplexed path according to claim 1 or 2, characterized in that said initial position is given by a marker value (C2X) recorded in the context, and in that the position of said scan cycle counter (C1X) is written into the context as a new initial position during the data rate evaluation processing of each received cell that refers to the context under consideration.

5. Apparatus for evaluating the data rate of virtual circuits conveying cells and occupying an asynchronous time-multiplexed path according to any one of claims 1 to 4, characterized in that it further includes means (CXM, MMD1, MMD2) for giving a maximum value (Dm2) that said time difference may take up and for giving a minimum value (Dm1) that may be taken up by the counted number of cells, for the purpose of restarting the evaluation process from a situation in which it is assumed that no cell has been received during a maximum time interval to be taken into consideration.
